# EUROPEAN PATENT APPLICATION

(11) **EP 4 197 986 A1**
(43) Date of publication of application: **21.06.2023**
(21) Application number: 21215699.6
(22) Date of filing: 17.12.2021
(51) Int. Cl.: C04B 28/08, C04B 40/00, C04B 111/00, C04B 111/60, C04B 111/62, C04B 111/72, C04B 111/70

(54) **ALKALI ACTIVATOR COMPOSITION**

(71) Applicant: ResourceFull BV, 3000 Leuven (BE)
(72) Inventor: ARNOUT, Lukas, B-3010 Kessel-Lo (BE); DIQUELOU, Youen, B-4000 Liège (BE); FRANÇOIS, Elise, 5652KA Eindhoven (NL); LAPAUW, Thomas, B-3010 Kessel-Lo (BE)
(74) Representative: IPLodge bv

(57) **Abstract**

The invention pertains to an activator composition for a mortar or concrete binder, comprising an alkali-containing compound; a compound containing a halogen element, different from the alkali-containing salt; a compound containing aluminium and a sulphate group; and a compound comprising 50 wt% or more of an earth-alkali metal oxide. The invention further pertains to a binder composition comprising the activator composition and at least one inorganic precursor.

## Description

### Technical Field

The present invention relates to an alkali activator composition for a concrete or a mortar binder. The present invention further relates to a binder composition comprising said activator composition, a concrete or mortar composition containing said binder composition and to the use of said binder composition in a concrete or a mortar or in a 3D printing application.

### Background Art

The production of cement clinker, the main compound of ordinary Portland cement (OPC), forming the most commonly used cement types, is a major contributor to the anthropogenic CO₂-emissions. It is estimated that the cement industry produces about 7% of the man-made carbon dioxide released in the atmosphere. Nearly all this carbon dioxide is emitted during the production of clinker, with the calcination of limestone being roughly responsible for 60% and the burning of fossil-based fuel used to heat the raw materials in the kiln responsible for the remaining 40% of the emitted carbon dioxide (A.P. Fantilli et al. « The carbon footprint of normal and high-strength concrete used in low-rise and high-rise buildings" https://doi.org/10.1016/j.cscm.2019.e00296).

Materials such as clays, ashes, slags, tailings, etc., have the potential to act as alternative binders for sustainable construction purposes, and have been investigated in the past. By replacing cement at least partially with such materials, wastes or industrial by-products derived from different commercial activities can be valorised. The basic principle is the dissolution of a precursor of such alternative materials in an alkaline environment followed by the precipitation of a durable body. By controlling these precipitation reactions, it is possible to use a combination of an amorphous precursor and an alkali-activator, forming an alkali-activated cement, in a way similar to OPC. Hence, an alternative to OPC-based concrete can be obtained.

However, these materials have often been found to be less reactive compared to OPC when combined with only water. Even ground granulated blast furnace slag (GGBFS), which is known as one of the most reactive and widely used admixtures to OPC, strongly slows down the strength development profile. To overcome the low reactivity of these alternative raw materials, it is known to mix the binder with alkaline activators. The exploration of alkali-activated slag cements started already more than a century ago and by now, a wide range of activators with slags have been described in literature. It is known to use high alkaline activators such as sodium hydroxide and sodium silicates to activate the precursor. More user-friendly activators such as sodium sulphate or sodium carbonate allow the development of add-water-only binders. The (compressive) strength development of these binders is however very slow. Not only the early strength is low when relying only on such soft activators, also the late strength is not high enough to develop high quality concrete. Early strength can be improved by adding a small amount of OPC or slaked lime. Significant additions of Portland cement however compromise the carbon-footprint of the binder.

The addition of halogen containing species have been known to help overcoming the reduced strength development. One of the most commonly used compounds are chlorine containing species. Such species accelerate the hydration process in OPC-containing binders and these accelerators are excellent for an improved early strength or at low temperatures without jeopardizing the strength at later age. One of the disadvantages, however, is the increased risk of having pitting corrosion of the steel rebar used in reinforced concrete. The latter is especially relevant for OPC-rich binders which have a lower resistance to Cl migration. Slag-rich cements where the presence of chlorine is less detrimental are therefore a better choice for such accelerators. Also, Fluorine-containing elements are known to be beneficial for the strength development of slag cements and alkali-activated slag binders.

WO 2017/085565 A2 discloses an OPC-free cementitious binder composition comprising a ground granulated blast furnace slag and/or pulverized fly ash, an alkali metal oxide, an alkali metal phosphate, an alkali metal fluoride, nano alkali metal carbonate, and an alkali metal sulphate.

Despite the solutions proposed here above, slow strength development profiles and often relatively low strength after curing for 28 days at ambient conditions remain an issue.

Slow strength development in cast bodies is especially undesirable in a construction industry where prefabrication is becoming more and more a preferred building method. For this type of construction, building elements are cast in a factory environment and when sufficiently hardened, transported to the construction site where they are assembled to form the final building. The curing speed or speed of hardening - which can be expressed by a (compressive) strength development profile, wherein compressive strength is measured in function of time - is for these concrete applications a major economic concern. For a prefabrication building method to remain economically viable, time to demould is a crucial factor. Hence, a concrete must have a high enough initial strength allowing to be demoulded in a short span of time, typically within 24 hours, without jeopardizing the final strength, which is typically approached after 28 days of curing.

There is therefore a need for an activator composition, said activator composition being combinable with an inorganic precursor, thereby forming a binder composition, wherein the strength development profile during curing of a 3D printed or cast concrete or mortar from said binder composition in combination with at least water, provides for a good final strength (e.g., after 28 days of curing) in combination with a relatively high early compressive strength (e.g., after 1 day), the latter enabling a rapid demoulding of the 3D printed or cast concrete or mortar. A further need exists to replace OPC and other cementitious materials herein at least partially by alternative materials, such as clays, ashes, slags, tailings and the like.

### Summary of the invention

According to an aspect of the invention, there is provided an activator composition for a mortar or concrete binder, the activator composition comprising:
a) an alkali-containing compound;
b) a compound containing a halogen element, wherein said compound b) is different from the alkali-containing compound a);
c) a compound containing aluminium and a sulphate group, wherein said compound c) is different from compounds a) and b); and
d) a compound comprising 40 wt% or more of an earth-alkali metal oxide.

It is an advantage of the present invention that an activator composition is provided which may be used in combination with an inorganic precursor, which precursor is not OPC or a similar cementitious material, in order to form a binder composition for use in a mortar or a concrete.

It has been found that the specific combination of the four components mentioned here above, results in an activator composition which allows a favourable compressive strength development profile of a 3D printed or cast concrete or mortar, obtained by combining said activator composition with an inorganic precursor as described herein.

A favourable strength development refers herein to a combination of a comparably high early strength, typically valued after one day, or about 24 hours, after casting or printing the 3D concrete or mortar body, and a comparably high final strength, a good value for which is the strength measured after 28 days.

It is a further advantage of the present invention, that the activator composition as provided herein enables the possibility to have an add-water only binder similar in user-friendliness as OPC. In practise this results in low adaptation cost for concrete plants where no structural modifications are required.

In an embodiment of the activator composition according to the present invention, said activator composition comprises
from 0.1 wt% to 95 wt% of said alkali-containing compound a),
from 0.1 wt% to 30 wt% of said compound containing a halogen element b),
from 0.1 wt% to 30 wt% of said compound containing aluminium and a sulphate group c),
from 0.1 wt% to 95 wt% of said compound comprising 40 wt% or more of an earth-alkali metal oxide d), with reference to the total dry weight of the activator composition.

In an embodiment of the activator composition according to the present invention, said alkali-containing compound a) is at least one of an oxide, hydroxide, silicate, carbonate, aluminate, sulphate of an alkali metal or ammonium and mixtures thereof.

In an embodiment of the activator composition according to the present invention, said compound containing a halogen element b) is at least one of: a fluoride, chloride, bromide, iodide, fluorosilicate, fluoroaluminate, fluorophosphate or fluorotitanate, of an alkali metal or earth alkali-metal or ammonium, and mixtures thereof.

In an embodiment of the activator composition according to the present invention, said compound containing aluminium and a sulphate group c) is one of Al₂(SO₄)₃, KAI(SO₄)₂ and its hydrates, calcium sulphoaluminate cement, Ca₄(AlO₂)₆SO₄ or ye'elimite, and hydrates thereof, Ca₆Al₂(SO₄)₃(OH)₁₂ and hydrates thereof, and mixtures thereof.

In an embodiment of the activator composition according to the present invention, said compound comprising 40 wt% or more of an earth-alkali metal oxide d) is at least one of clinker for ordinary Portland cement (OPC) and OPC blends; CEM I; calcium aluminate cement; Ca(OH)₂; CaO; MgO; Mg(OH)₂; as well as mixtures thereof.

In an embodiment of the activator composition according to the present invention, the activator composition further comprises at least one organic acid or a salt thereof e), wherein said organic acid is preferably one of oxalic acid, tartaric acid, tannic acid, lactic acid or citric acid or mixtures thereof.

In an embodiment of the activator composition according to the present invention, the activator composition comprises from 0.1 wt% to 20 wt% of said at least one organic acid or a salt thereof e), with reference to the total dry weight of the activator composition.

According to an aspect of the invention, there is provided a binder composition for mortar or concrete, the composition comprising
- the activator composition as described herein; and
- at least one inorganic precursor f).

It is an advantage of the present invention that a binder composition is provided which allows to obtain a mortar or a concrete, wherein inorganic precursors such as OPC are at least partially replaced by alternative materials which are typically industrial by-products from different industrial activities. Such alternative materials may be considered waste materials.

It is a further advantage that the binder composition, containing the activator composition as described herein, may provide a mortar or concrete, which has an advantageous curing speed, as expressed by a strength development profile.

In an embodiment of the binder composition according to the present invention, said binder composition comprises from 50 wt% to 99.8 wt% of said at least one inorganic precursor f) and from 0.2 wt% to 50 wt% of said activator composition, with reference to the total dry weight of the binder composition.

In an embodiment of the binder composition according to the present invention, said at least one inorganic precursor f) is one of the following:
- a slag, wherein said slag is a ground granulated blast furnace slag (GGBFS), a basic oxygen furnace slag, a ladle slag, a ferrous metallurgical slag or stainless-steel slag, or a slag from non-ferrous metal production, the latter including a zinc metallurgical slag, a nickel metallurgical slag, a lead metallurgical slag, a tin metallurgical slag, or a copper metallurgical slag;
- an ash, wherein said ash is a fly ash of class C or class F, a bottom ash, paper sludge ash, or a biomass ash;
- calcined mine tailings;
- leach residues from metal extraction;
- ground glass;
- cement kiln dust;
- electric arc furnace dust;
- red mud or bauxite residue;
- silica fume;
- clay or calcined clay;
- ground limestone or dolomite;
- synthetic slag or glass;
   and mixtures thereof.

In an embodiment of the binder composition according to the present invention, said binder composition further comprises at least one plasticizing agent g), wherein said at least one plasticizing agent g) is preferably one of a naphthalene-based superplasticizer; a lignosulphate; a protein, such as casein; a naphtalene sulphonate; a melamine-based superplasticizer; a polycarboxylic ether (PCE) or poly acrylic ether (PAE), a salt or derivative thereof; and mixtures thereof.

In an embodiment of the binder composition according to the present invention, said binder composition comprises from 0.01 wt% to 5 wt% of said at least one plasticizing agent, with reference to the total dry weight of the binder composition.

According to an aspect of the invention, there is provided a concrete or mortar composition comprising the binder composition as described herein and at least one of water, sand, gravel and an aggregate.

It is an advantage of the present invention that said concrete or mortar, comprising said binder composition containing said activator composition, can have a rapid curing after casting, wherein the strength development profile is characterized by both a comparably high early strength and a comparably high final strength.

According to an aspect of the invention, there is provided the use of a binder composition as described herein in a mortar or a concrete or in 3D printing applications, including paver, ready mix concrete, floors and screeds, self-compacting concrete, architectonic concrete, dry-pressed concrete, soil stabilization, grouting, heavy-weight concrete, light-weight concrete, wood pulp concrete, road concrete, and/or repair mortars.

### Brief Description of the Drawings

Various technical effects and advantages of embodiments of the present invention will now be described with reference to the accompanying figures, in which:
- Figure 1 illustrates the effect of compound b) on the compressive strength development of a mortar material containing a binder composition having an activator composition as described herein.
- Figure 2 illustrates the effect of compound c) on the compressive strength development of a mortar material containing a binder composition having an activator composition as described herein.
- Figure 3 illustrates the effect of compound c) on the compressive strength development of a mortar material containing a binder composition having an activator composition as described herein, when cured at 15°C.
- Figure 4 illustrates the effect of compound d) on the compressive strength development of a mortar material containing a binder composition having an activator composition as described herein.
- Figure 5 illustrates the effect of organic acid e) on the compressive strength development of a mortar material containing a binder composition having an activator composition as described herein.
- Figure 6 illustrates the effect of organic acid e) on the compressive strength development of a mortar material containing a binder composition having an activator composition as described herein, when cured at 40°C.
- Figure 7 illustrates compressive strength development of a mortar material containing a binder composition having an activator composition as described herein, according to an advantageous embodiment.
- Figure 8 illustrates compressive strength development of a mortar material containing a binder composition having an activator composition as described herein, according to an advantageous embodiment.

### Detailed description of the invention

The present invention will be described with respect to particular embodiments and with reference to certain drawings, but the invention is not limited thereto but only by the claims.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

For the purpose of the invention, the term "slag" refers herein to a waste material produced during the smelting or refining of metals, which typically occurs by reaction of a flux with impurities.

For the purpose of the invention, the term "cement" refers herein to a substance made for use in mortar or concrete. The term can refer to ordinary Portland cement (OPC).

For the purpose of the invention, the term "D50" refers herein to a mass-median-diameter, considered to be the average particle size by mass. D50 may be measured by experimental techniques such as laser diffraction.

For the purpose of the invention, the term "hydraulic material" relates to an inorganic material that has the ability to react with water under ambient conditions to form a hardened and water-resistant product.

In an aspect according to the invention, there is provided an activator composition for a mortar or concrete binder, the activator composition comprising:
a) An alkali-containing compound;
b) A compound containing a halogen element, wherein said compound b) is different from the alkali-containing compound a);
c) A compound containing aluminium and a sulphate group, wherein said compound c) is different from compounds a) and b); and
d) A compound comprising 40 wt% or more of an earth-alkali metal oxide.

In embodiments according to the invention, the activator composition comprises said alkali-containing compound a) in a range of 0.1 wt% - 95 wt% with reference to the total dry weight of the activator composition.

Preferably, the activator composition comprises at least 0.5 wt%, more preferably at least 1 wt%, more preferably at least 2 wt%, even more preferably at least 5 wt%, more preferably at least 10 wt%, and most preferably at least 20 wt% of said alkali-containing compound a) with reference to the total dry composition. It is further understood that the activator composition preferably comprises at most 90 wt%, preferably at most 80 wt%, more preferably at most 70 wt%, even more preferably at most 60 wt%, more preferably at most 50 wt%, and most preferably at most 40 wt% of said alkali-containing compound a) with reference to the total dry composition.

In embodiments according to the invention, the activator composition comprises said compound containing a halogen element b) in a range of 0.1 wt% - 30 wt% with reference to the total dry weight of the activator composition.

Preferably, the activator composition comprises at least 0.5 wt%, more preferably at least 1 wt%, even more preferably at least 2 wt%, more preferably at least 4 wt%, even more preferably at least 6 wt%, and most preferably at least 8 wt% of said compound containing a halogen element b) with reference to the total dry composition. It is further understood that the activator composition preferably comprises at most 25 wt%, preferably at most 20 wt%, and most preferably at most 15 wt% of said compound containing a halogen element b) with reference to the total dry composition.

In embodiments according to the invention, the activator composition comprises said compound containing aluminium and a sulphate group c) in a range of 0.1 wt% - 30 wt% with reference to the total dry weight of the activator composition.

Preferably, the activator composition comprises at least 0.5 wt%, more preferably at least 1 wt%, even more preferably at least 2 wt%, more preferably at least 4 wt%, even more preferably at least 6 wt%, and most preferably at least 8 wt% of said compound containing aluminium and a sulphate group c) with reference to the total dry composition. It is further understood that the activator composition preferably comprises at most 25 wt%, preferably at most 20 wt%, and most preferably at most 15 wt% of said compound containing aluminium and a sulphate group c) with reference to the total dry composition.

In embodiments according to the invention, the activator composition comprises said compound comprising 40 wt% or more of an earth-alkali metal oxide d) in a range of 0.1 wt% - 95 wt% with reference to the total dry weight of the activator composition.

Preferably, the activator composition comprises at least 0.5 wt%, more preferably at least 1 wt%, more preferably at least 2 wt%, even more preferably at least 5 wt%, more preferably at least 10 wt%, even more preferably at least 20 wt%, more preferably at least 30 wt%, and most preferably at least 40 wt% of said compound d) with reference to the total dry composition. It is further understood that the activator composition preferably comprises at most 90 wt%, preferably at most 80 wt%, more preferably at most 70 wt%, and most preferably at most 60 wt% of said compound d) with reference to the total dry composition.

In embodiments according to the invention, said alkali-containing compound a) relates to or is an alkali-containing activator.

In embodiments according to the invention, said alkali-containing compound a) relates to or is an alkali-containing salt.

Said alkali-containing compound a) is typically added for the purpose of increasing the pH in a binder, comprising said activator composition, in a binder-water-aggregate and/or sand and/or gravel mixture, wherein said compound or salt promotes or speeds up the setting, curing and/or hardening of the mixture.

Preferably, said alkali-containing compound a) is in solid, e.g. powder, form, but it can also be in liquid form.

Preferably, said alkali-containing compound a) comprises or is at least one of an oxide, hydroxide, silicate, carbonate, aluminate, sulphate of an alkali metal or ammonium and mixtures thereof.

Preferably, the alkali-containing compound a) comprises or is at least one of the following: potassium silicate (K₂O. nSiO₂ with n = 0.5-4), sodium silicate (Na₂O. nSiO₂ with n = 0.5-4), NaAlO₂, KAlO₂, Na₂SO₄, K₂SO₄, K₂O, Na₂O, NaOH, LiOH, KOH, Na₂CO₃, K₂CO₃.

In preferred embodiments, said alkali-containing salt a) is an alkali sulphate or an alkali hydroxide, and mixtures thereof.

Preferably, said alkali-containing salt a) is an alkali sulphate, such as K₂SO₄ or Na₂SO₄, and mixtures thereof.

In embodiments according to the invention, said compound containing a halogen element b) relates to or is a salt containing a halogen element b).

In embodiments according to the invention, said compound containing a halogen element b) comprises at least one of - or is selected from - the following: a fluoride, chloride, bromide, iodide, fluorosilicate, fluoroaluminate (or aluminium hexafluoride), fluorophosphate or fluorotitanate, of an alkali metal or earth alkali-metal or ammonium, and mixtures thereof.

Halogen containing species are typically added to a binder mixture for the purpose of increasing the final strength of the cast concrete body.

Preferably, said compound containing a halogen element b) is in solid, e.g. powder, form, but it can also be in liquid form.

Preferably, said compound containing a halogen element b) comprises at least one of the following: NaF, KF, LiF, Na₂SiF₆, Li₃AlF₆, Na₃AlF₆, K₂SiF₆, K₃AlF₆, KAlF₄, NaBF₄, KBF₆, NaHF₂, KHF₂, NH₄HF₂, BaF₂, AlF₃, K₂TiF₆, K₂ZrF₆, MgSiF₆, CaF₂, MgF₂, NH₄F, NaCl, KCI, LiCI, CaCl₂, MgCl₂, NH₄Cl, NaBr, KBr, CaBr₂, MgBr₂, NH₄Br, Nal, Kl, CaI₂, MgI₂, NH₄I.

In preferred embodiments, said compound b) is a fluoride or a chloride. Preferably, said compound b) is a fluoride, such as NaF, KF, LiF, CaF₂, MgF₂, Na₂SiF₆, MgSiF₆, Na₃AlF₆, K₂SiF₆, or K₃AlF₆, and mixtures thereof and most preferably Na₂SiF₆, Na3AIF6, K₂SiF₆, or K3AIF6.

In embodiments according to the invention, said compound containing aluminium and a sulphate group c) relates to or is a mineral containing aluminium and a sulphate group c). In embodiments according to the invention, said compound containing aluminium and a sulphate group c) is an aluminium sulphate containing species, which can be in solid, e.g. powder, form, but can also be in liquid form.

It has been found that said compound c) has a positive effect on early hardening of a cast concrete body, expressed as a relative high value for compressive strength within the first 48 hours or 24 hours after casting.

Preferably, said compound c) can be or is selected from the following: Al₂(SO₄)₃; KAl(SO₄)₂ or potash alum and its hydrates; calcium sulphoaluminate cement; Ca₄(AlO₂)₆SO₄ or ye'elimite, and hydrates thereof; Ca₆Al₂(SO₄)₃(OH)₁₂ or ettringite and hydrates thereof; and mixtures thereof.

Said compound c) is preferably KAl(SO₄)₂.12H₂O.

In embodiments according to the invention, said compound comprising 40 wt% or more of an earth-alkali metal oxide d) typically relates to a hydraulic material.

Said compound d) is typically added to a binder mixture to facilitate hardening and to increase early strength of the cast concrete body.

Preferably, compound d) comprises at least one of clinker for ordinary Portland cement (OPC), calcium aluminate cement, Ca(OH)₂, CaO, MgO, Mg(OH)₂, as well as mixtures thereof.

In embodiments, compound d) may comprise a slaked lime producing compound, such as OPC.

Said clinker for OPC may be part of a cement blend, such as CEM I, CEM II, CEM III, CEM IV or CEM V, and mixtures thereof, according to the EN 197-1 standard.

In embodiments according to the invention, said compound d) comprises at least 50 wt%, preferably at least 60 wt%, more preferably at least 70 wt% and most preferably at least 80 wt% or more of an earth-alkali metal oxide.

In preferred embodiments, said compound d) comprises 40 wt% or more of a calcium oxide.

Preferably, said compound d) comprises CaO or Ca(OH)₂.

Preferably, said compound d) is Ca(OH)₂.

Said compound containing a halogen element b) is different from said alkali-containing compound a), said compound containing aluminium and a sulphate group c) is different from compound a) and compound

b), and said compound d) is different from compounds a), b) and c). Hence, it will be understood that the activator composition will comprise at least a first compound which can described as a compound or salt a), a second compound which can be described as a compound or salt b), a third compound which can be described as a compound or mineral c) and a fourth compound which can be described as a compound d), wherein said compounds are not the same.

In embodiments according to the invention, the activator composition further comprises at least one organic acid or a salt thereof e), wherein said organic acid is preferably one of oxalic acid, tartaric acid, tannic acid, lactic acid or citric acid or mixtures thereof. Said salts include, but are not limited to, sodium citrate, sodium oxalate, sodium tartrate, potassium tartrate, potassium bitartrate (cream of tartar), sodium lactate, and potassium lactate, magnesium lactate, calcium lactate, magnesium citrate, calcium citrate, magnesium oxalate, calcium oxalate.

It has been found that said organic acid or a salt thereof e) has a positive effect on the final strength of the cast concrete. However, said organic acid or a salt thereof e) may have a negative effect on the early hardening and early strength of a cast concrete body.

In a preferred embodiment, the activator composition comprises sodium citrate.

In embodiments according to the invention, the activator composition comprises said at least one organic acid or a salt e) in a range of 0.1 wt% - 20 wt% with reference to the total dry weight of the activator composition.

Preferably, the activator composition comprises at least 0.5 wt%, more preferably at least 1 wt%, even more preferably at least 1.5 wt%, and most preferably at least 2 wt% of said at least one organic acid or a salt thereof e) with reference to the total dry composition.

It is further understood that the activator composition preferably comprises at most 15 wt%, preferably at most 10 wt%, more preferably at most 8 wt%, and most preferably at most 6 wt% of said at least one organic acid or a salt thereof e) with reference to the total dry composition.

In an aspect according to the invention, there is provided a binder composition for mortar of concrete, the composition comprising
- said activator composition as described herein; and
- at least one inorganic precursor f).

In embodiments according to the invention, said binder composition comprises said activator composition in a range of 0.2 wt% - 50 wt% with reference to the total dry weight of the binder composition, and said at least one inorganic precursor f) in a range of 99.8 wt% - 50 wt% with reference to the total dry weight of the binder composition.

In preferred embodiments, said binder composition comprises at least 55 wt%, preferably at least 60 wt%, more preferably at least 65 wt%, even more preferably at least 70 wt%, and most preferably at least 75 wt% of said at least one inorganic precursor f) with reference to the total dry weight of the binder composition. It is further understood that said binder composition comprises at most 99 wt%, preferably at most 97 wt%, more preferably at most 95 wt%, and most preferably at most 93 wt% of said at least one inorganic precursor f) with reference to the total dry weight of the binder composition.

In embodiments according to the invention, said at least one inorganic precursor f) is a mineral precursor. In embodiments according to the invention, said at least one inorganic precursor f) comprises at least one of the following:
- a slag, wherein said slag is a ground granulated blast furnace slag (GGBFS); a basic oxygen furnace slag; a ladle slag; a ferrous metallurgical slag or stainless-steel slag, such as a basic oxygen furnace slag (BOF slag); a slag from non-ferrous metal production, the latter including a zinc metallurgical slag, a nickel metallurgical slag, a lead metallurgical slag, a tin metallurgical slag, or a copper metallurgical slag;
- an ash, wherein said ash is a fly ash of class C or class F, a bottom ash, paper sludge ash, or a biomass ash;
- calcined mine tailings;
- leach residues from metal extraction;
- ground glass;
- cement kiln dust;
- electric arc furnace dust;
- red mud or a bauxite residue;
- silica fume;
- clay or calcined clay;
- synthetic slag or glass;
- ground limestone or dolomite;
and mixtures thereof.

Preferably, the slag is a ground slag, most preferably ground granulated blast furnace slag.

In preferred embodiments, said at least one inorganic precursor f) can be a powder or can be composed of particles, possibly milled particles.

The air permeability specific surface of a powder material measures the fineness of powder. In preferred embodiments, the air permeability specific surface of the at least one inorganic precursor f) particles is at least 1000 cm²/g, preferably at least 1500 cm²/g, more preferably at least 2000 cm²/g, even more preferably at least 2500 cm²/g, and most preferably at least 3000 cm²/g. Although no upper limit exists, the air permeability specific surface of the at least one inorganic precursor f) particles is will typically be at most 15000 cm²/g, at most 13000 cm²/g, at most 11000 cm²/g, at most 9000 cm²/g, or at most 7000 cm²/g. The inventors have found that excellent results can be obtained when the air permeability specific surface of the at least one inorganic precursor f) particles is between 3000 cm²/g and 7000 cm²/g or in the order of 4000-5000 cm²/g. The air permeability specific surface as reported herein has been measured by use of the Blaine method (ASTM C204) using a Blaine Air Permeability Apparatus (e.g., E009 KIT by Matest).

In preferred embodiments, the at least one inorganic precursor f) is at least partially amorphous. Preferably, at least 30 wt% of the at least one inorganic precursor f) is amorphous, more preferably at least 40 wt%, even more preferably at least 50 wt%, more preferably at least 70 wt% and most preferably at least 80 wt%.

In embodiments according to the invention, the powder particles of the at least one inorganic precursor f) have a particle size distribution with a mass-median diameter D50 which is at least 500nm, preferably at least 1 µm, more preferably at least 2 µm, even more preferably at least 3 µm, more preferably at least 4 µm, and most preferably at least 5 µm. The skilled person will appreciate that 50% of the particles have a diameter that is less than the indicated number, and 50% of the particles have a diameter that is greater than the indicated number. It will further be understood that the powder particles typically have a particle size distribution with a diameter D50 being at most 50 µm, preferably at most 40 µm, more preferably at most 30 µm, even more preferably at most 20 and most preferably at most 10 µm. The inventors have found that, although in general a lower D50 value is appreciated, excellent results may be obtained when the mass-median diameter D50 is between 1 µm and 20 µm, preferably between 5µm and 10 µm. Powder particles as used herein can be measured by use of laser diffraction, which is a standard technique, more in particular by use of a Beckman Coulter LS 13 320 device.

In embodiments according to the invention, the binder composition further comprises at least one plasticizing agent g).

Preferably, said at least one plasticizing agent g) is one of a naphthalene-based superplasticizer; a lignosulphate; a protein, such as casein; a naphtalene sulphonate; a melamine-based superplasticizer; a polycarboxylic ether (PCE) or poly acrylic ether (PAE), a salt or derivative thereof; and mixtures thereof. In preferred embodiments, the at least one plasticizing agent g) comprises at least PCE-based superplasticizer or consists of a PCE-based superplasticizer.

According to embodiments of the invention, when present in the binder composition, the binder composition comprises said at least one plasticizing agent g) in the range of 0.01 wt% - 5 wt% with reference to the total dry weight of the binder composition.

Preferably, the binder composition comprises at least 0.05 wt%, more preferably at least 0.1 wt%, more preferably at least 0.5 wt%, even more preferably at least 1 wt%, and most preferably at least 2 wt% of said at least one plasticizing agent g) with reference to the total dry weight of the binder composition. It will be further understood that the binder composition preferably comprises at most 5.0 wt%, more preferably at most 4.5 wt%, even more preferably at most 4.0 wt%, and most preferably at most 3.5 wt% of said at least one plasticizing agent g) with reference to the total dry weight of the binder composition. According to alternative embodiments, the binder composition does not contain said at least one plasticizing agent g) or only in trace amounts (being less than 0.01 wt% with reference to the dry composition).

It will be clear to the skilled in the art, that, although the concentrations for the activator composition or the binder composition are given as if the components are present in dry form, both compositions or at least one of its components, may be used in, or be present in, the composition in liquid form.

It has been found unexpectedly that the combination of the four components forming the activator composition as described herein, allow the formation of a concrete or mortar, having a favourable, rapid curing speed.

Advantageously, said activator composition is configured to provide or may provide for a binder composition, in combination with at least one inorganic precursor, for forming a concrete or mortar, having a favourable curing speed or a favourable compressive strength development profile upon casting. Advantageously, said at least one inorganic precursor, is not OPC or another cementitious material, but is selected from slag, ash, tailings, clays and similar materials as described herein.

A favourable strength development refers herein to a combination of a comparably high early strength, typically valued after one day, or about 24 hours, after casting the concrete or mortar, and a comparably high final strength, a good value for which is the strength measured after 28 days. Typically, such strength development profile is evaluated for a concrete or mortar which is cured or curing at 20°C.

A high early strength will typically relate to a strength allowing the demoulding of the cast concrete or mortar after 24 hours, after 20 hours or after 18 hours. It will be appreciated by the skilled person that the period of time before a concrete or mortar three-dimensional element can be demoulded will depend on the composition of the concrete or mortar, as well as the shape of the element.

A high or favourable early strength may be a compressive strength of at least 4MPa, preferably at least 5MPa, more preferably at least 6MPa, even more preferably at least 7MPa, and most preferably at least 8MPa.

A high or favourable final strength will be measured after 28 days. A high final strength may be a strength which is at least 35MPa, preferably at least 40MPa, and more preferably at least 45MPa.

In an aspect according to the invention, there is provided a concrete or mortar composition comprising the binder composition as described herein and at least one of water, sand, gravel and an aggregate.

In an aspect according to the invention, there is provided a use of a binder composition as described herein in a mortar or a concrete or in 3D printing or casting application, including paver, ready mix concrete, floors and screeds, self-compacting concrete, architectonic concrete, dry-pressed concrete, soil stabilization, grouting, heavy-weight concrete, light-weight concrete, wood pulp concrete, road concrete, and/or repair mortars.

Said mortar or concrete can be cast or printed in the shape of a three-dimensional body. Said body can have the shape of a slab or plate, e.g. for the purpose of forming a wall or floor.

While the invention has been described hereinabove with reference to specific embodiments, this is done to illustrate and not to limit the invention, the scope of which is defined by the accompanying claims. The skilled person will readily appreciate that different combinations of features than those described herein are possible without departing from the scope of the claimed invention.

### EXPERIMENTAL RESULTS

The invention will now be described in more details with reference to the following examples, whose purpose is merely illustrative and not intended to limit the scope of the invention.

The following raw materials, as summarized in Table 1, have been used in the experiments below.

**Table 1- compositions and air permeability specific surfaces for the at least one inorganic precursor f)**

| | Fe₂O₃ | SiO₂ | CaO | Al₂O₃ | MgO | Blaine surface (cm²/g) |
|---|---|---|---|---|---|---|
| GGBFS 1 | 0.6 | 32.6 | 45.3 | 11 | 6.3 | 4500 +/- 300 |
| GGBFS 2 | 0.5 | 32.1 | 42.8 | 15.2 | 4.5 | 7000 +/- 300 |
| Fly Ash | 5.8 | 54.3 | 1.9 | 28.2 | 1.6 | 3500 +/- 300 |

wherein the components of the at least one inorganic precursor f) are expressed in weight percentage. As is known by the skilled person, the remainder of a precursor composition, such as a slag or an ash, is usually made up of a large number of compounds (typically 10-20) which are typically present in small concentrations.

In the experiments below, compositions for a series of mortars, comprising a binder composition with at least one inorganic precursor and an activator composition, are presented. The compositions are prepared by mixing the dry components of the mixture, followed by adding under continuous mixing the components in liquid form, the latter being at least water. Sand as used herein is CEN Standard Sand. The components in the experiments below are expressed in weight.

After adding all components, mixing is typically done for a period of a few minutes, the period used in the experiments herein is 3 minutes. In a subsequent step, the mixture is cast into beams with dimensions 40^{∗}40^{∗}160mm³ and allowed to cure at room temperature - unless stated otherwise - with a strength profile being measured at different times after preparing the mixture (1 day, 2 days, 7 days, 28 days and in some examples 90 days). The increase in strength is regarded as evidence for an effect of improved reactivity and durability of the binder.

Compressive strength was measured according to EN 196-1 using a compression and flexural testing machine (300/15 kN), Cyber-plus evolution E181N by Matest.

### Example 1 (E1) - Counter Example 1 (CE1) - effect of compound b)

Mortar compositions were defined, having the following compositions as summarized in Table 2.

**Table 2**

| Compound | Chemical | Dosage (g) | |
|---|---|---|---|
| | | CE1 | E1 |
| a) | Na₂SO₄ | 30 | 30 |
| b) | Na₂SiF₆ | 0 | 10 |
| c) | KAl(SO₄)₂.12H₂O | 10 | 10 |
| d) | Ca(OH)₂ | 50 | 50 |
| f) | GGBFS 1 | 900 | 890 |
| | water | 450 | 450 |
| | Sand | 3000 | 3000 |

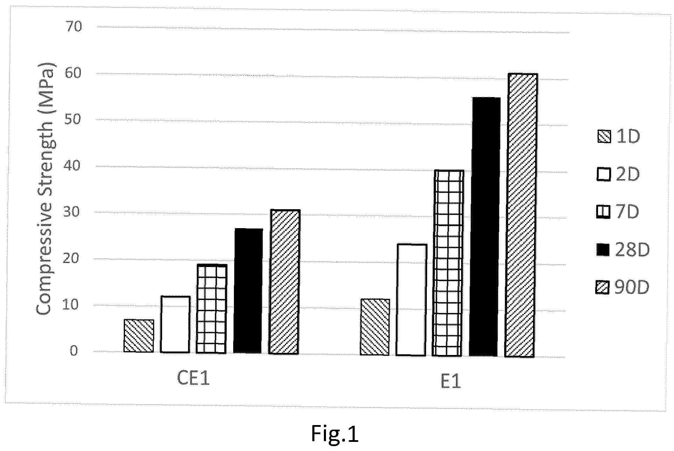

The development of compressive strength in time (strength development profile) is presented in Fig. 1, which shows the effect of the addition of compound b) to an activator composition. Addition of compound b) as described herein has a positive influence on both early strength development (increasing from 7 MPa to 12 MPa after 1 day curing) and final strength development (increasing from 27MPa to 56 MPa after 28 days curing).

### Example 2 (E2) - Counter Example 2 (CE2) - effect of compound c)

Mortar compositions were defined, having the following compositions as summarized in Table 3.

**Table 3**

| Compound | Chemical | Dosage (g) | |
|---|---|---|---|
| | | CE2 | E2 |
| a) | K₂SO₄ | 40 | 40 |
| b) | Na₂SiF₆ | 10 | 10 |
| c) | KAl(SO₄)₂.12H₂O | 0 | 10 |
| d) | Ca(OH)₂ | 50 | 50 |
| f) | GGBFS 1 | 900 | 890 |
| | water | 450 | 450 |
| | Sand | 3000 | 3000 |

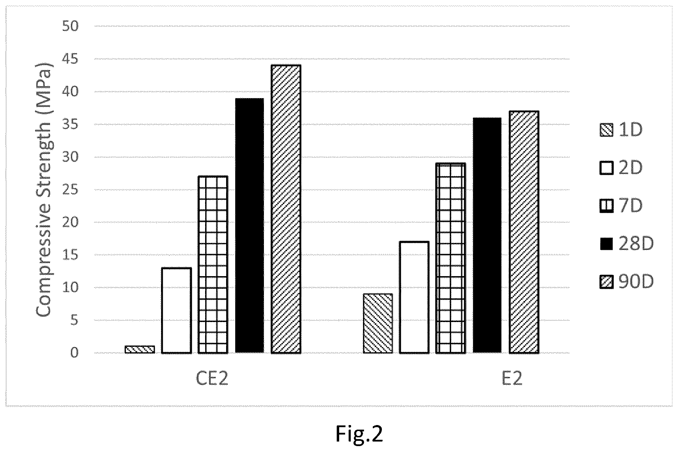

The development of compressive strength in time (strength development profile) is presented in Fig. 2, which shows the effect of the addition of compound c) to an activator composition. Addition of compound c) as described herein has a positive influence on early strength development (increasing from 1 MPa to 9 MPa after 1 day curing).

### Example 3 (E3) - Counter Example 3 (CE3) - effect of compound c) at lower temperature (15°C)

Mortar compositions were defined, having the following compositions as summarized in Table 4.

**Table 4**

| Compound | Chemical | Dosage (g) | |
|---|---|---|---|
| | | CE3 | E3 |
| a) | Na₂SO₄ | 30 | 30 |
| b) | Na₂SiF₆ | 10 | 10 |
| c) | KAl(SO₄)₂.12H₂O | 0 | 10 |
| d) | Ca(OH)₂ | 50 | 50 |
| f) | GGBFS 1 | 910 | 900 |
| | water | 450 | 450 |
| | Sand | 3000 | 3000 |

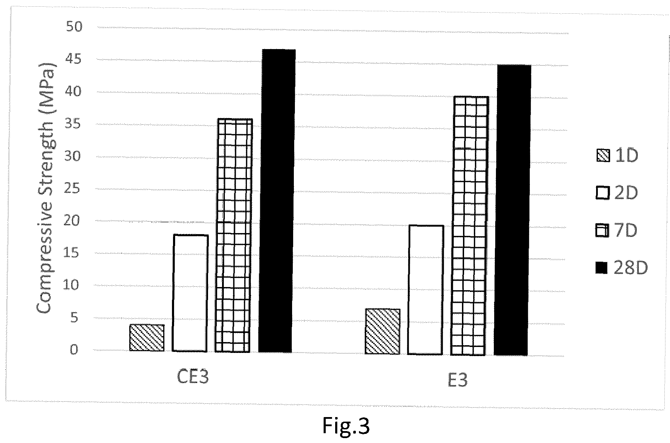

The development of compressive strength in time (strength development profile) is presented in Fig. 3, which shows the effect of the addition of compound c) to an activator composition and curing of said mortar composition for 28 days at a temperature of 15°C. Addition of compound c) as described herein has a positive influence on early strength development (increasing from 4 MPa to 7 MPa).

### Examples 4-8 (E4-E8) - Counter Example 4 (CE4) - effect of compound d)

Mortar compositions were defined, having the following compositions as summarized in Table 5.

**Table 5**

| Compound | Chemical | Dosage (g) | | | | | |
|---|---|---|---|---|---|---|---|
| | | CE4 | E4 | E5 | E6 | E7 | E8 |
| a) | Na₂SO₄ | 30 | 30 | 30 | 30 | 30 | 30 |
| b) | Na₂SiF₆ | 10 | 10 | 10 | 10 | 10 | 10 |
| c) | KAl(SO₄)₂.12H₂O | 0 | 10 | 20 | 30 | 40 | 50 |
| d) | Ca(OH)₂ | 50 | 50 | 50 | 50 | 50 | 50 |
| f) | GGBFS 1 | 950 | 940 | 930 | 920 | 910 | 900 |
| | water | 450 | 450 | 450 | 450 | 450 | 450 |
| | Sand | 3000 | 3000 | 3000 | 3000 | 3000 | 3000 |

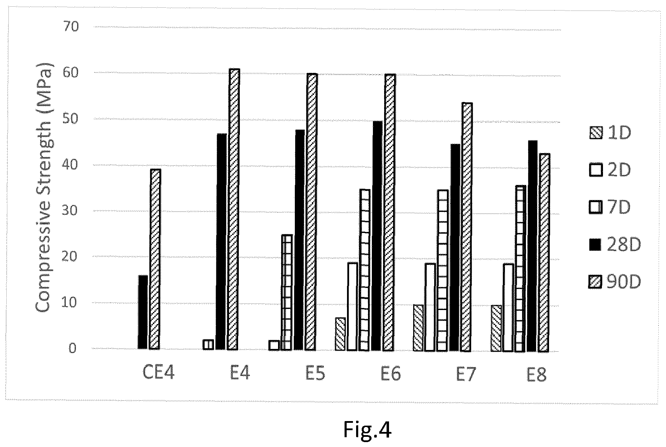

The development of compressive strength in time (strength development profile) is presented in Fig. 4, which shows the effect of the addition of compound d) to an activator composition. Addition of compound d) as described herein has a positive influence on early strength development.

### Examples 9-11 (E9-E11) - effect of organic acid e)

Mortar compositions were defined, having the following compositions as summarized in Table 6.

**Table 6**

| Compound | Chemical | Dosage (g) | | |
|---|---|---|---|---|
| | | E9 | E10 | E11 |
| a) | Na₂SO₄ | 30 | 30 | 30 |
| b) | Na₂SiF₆ | 10 | 10 | 10 |
| c) | KAl(SO₄)₂.12H₂O | 0 | 10 | 10 |
| d) | Ca(OH)₂ | 50 | 50 | 50 |
| e) | Sodium citrate | 0 | 2.5 | 5 |
| f) | GGBFS 1 | 910 | 900 | 900 |
| | water | 450 | 450 | 450 |
| | Sand | 3000 | 3000 | 3000 |

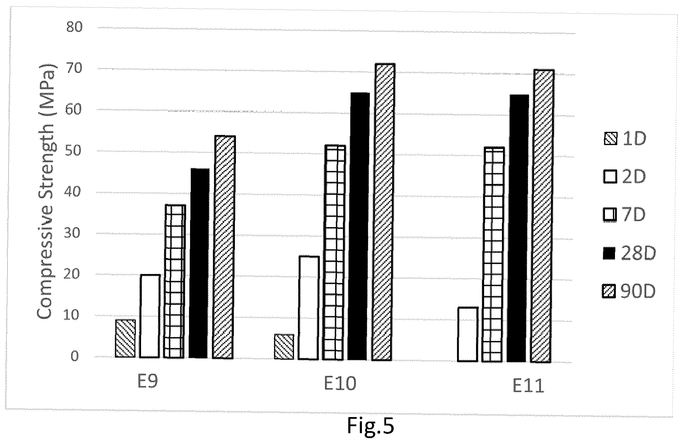

The development of compressive strength in time (strength development profile) is presented in Fig. 5, which shows the effect of the addition of organic acid e) to an activator composition. Addition of organic acid e) as described herein has a positive influence on final strength development but a negative influence on early strength development.

### Examples 12-15 (E12-E15) - effect of organic acid e) at higher temperature (40°C)

Mortar compositions were defined, having the following compositions as summarized in Table 7.

**Table 7**

| Compound | Chemical | Dosage (g) | | | |
|---|---|---|---|---|---|
| | | E12 (20°C) | E13 (20°C) | E14 (40°C) | E15 (40°C) |
| a) | Na₂SO₄ | 30 | 30 | 30 | 30 |
| b) | Na₂SiF₆ | 10 | 10 | 10 | 10 |
| c) | KAl(SO₄)₂.12H₂O | 10 | 10 | 10 | 10 |
| d) | Ca(OH)₂ | 50 | 50 | 50 | 50 |
| e) | Sodium citrate | 0 | 5 | 0 | 5 |
| f) | GGBFS 1 | 910 | 900 | 910 | 900 |
| | water | 450 | 450 | 450 | 450 |
| | Sand | 3000 | 3000 | 3000 | 3000 |

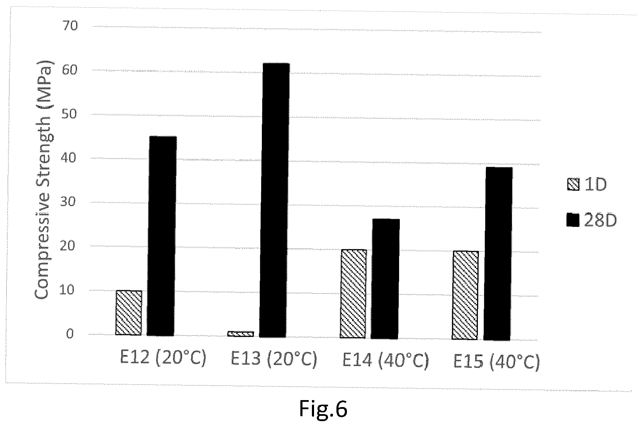

The development of compressive strength in time (strength development profile) for two different temperatures, 20°C (being room temperature) and 40°C, is presented in Fig. 6, which shows the effect of the addition of organic acid e) to an activator composition for two difference temperatures. Addition of organic acid e) as described herein at a temperature of 40°C and subsequent curing of said mortar composition at said temperature has a positive influence on final strength, without having a negative influence on early strength development.

### Example 16 (E16) - Counter Example 5 (CE5)

Mortar compositions were defined, having the following compositions as summarized in Table 8.

**Table 8**

| Compound | Chemical | Dosage (g) | |
|---|---|---|---|
| | | CE5 | E16 |
| a) | NaOH | 37.5 | 37.5 |
| b) | Na3AIF6 | 0 | 5 |
| c) | KAl(SO₄)₂.12H₂O | 1 | 1 |
| d) | MgO | 1 | 1 |
| f) | GGBFS 2 | 500 | 500 |
| f) | Fly Ash | 500 | 500 |
| | water | 308 | 308 |
| | Sand | 2000 | 2000 |

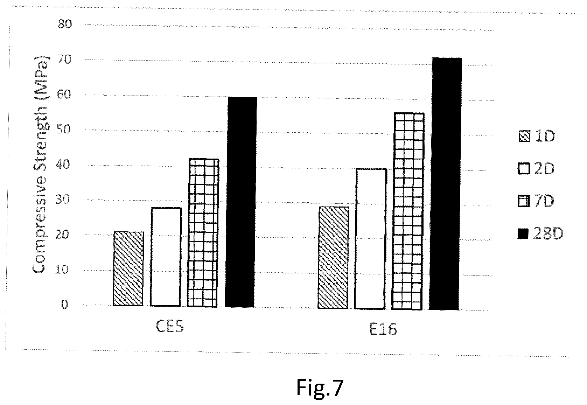

The development of compressive strength in time (strength development profile) is presented in Fig. 7, which shows the effect of the addition of compound b) to an activator composition. Addition of compound b) as described herein has a positive influence on both early strength development (increasing from 21 MPa to 29 MPa after 1 day curing) and final strength development (increasing from 60MPa to 72 MPa after 28 days curing).

### Example 17 (E17) - Counter Example 6 (CE6)

Mortar compositions were defined, having the following compositions as summarized in Table 9.

**Table 9**

| Compound | Chemical | Dosage (g) | |
|---|---|---|---|
| | | CE6 | E17 |
| a) | K₂SO₄ | 0 | 40 |
| b) | KCl | 0 | 10 |
| c) | KAl(SO₄)₂.12H₂O | 0 | 10 |
| d) | CEM I 52.5R | 150 | 150 |
| f) | GGBFS 1 | 850 | 790 |
| | water | 450 | 450 |
| | Sand | 3000 | 3000 |

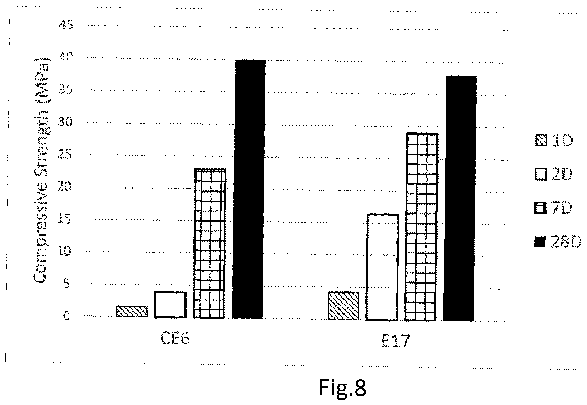

The development of compressive strength in time (strength development profile) is presented in Fig. 8, which shows the effect of the addition of compounds a), b) and c) to an activator composition. The combined addition of said compounds as described herein has notably a positive influence on early strength development (increasing from 1.6 MPa to 4.2 MPa after 1 day curing), while in this case leaving the value for final strength unchanged.

## Claims

1. An activator composition for a mortar or concrete binder, the activator composition comprising:
a) An alkali-containing compound;
b) A compound containing a halogen element, wherein said compound b) is different from the alkali-containing compound a);
c) A compound containing aluminium and a sulphate group, wherein said compound c) is different from compounds a) and b); and
d) A compound comprising 40 wt% or more of an earth-alkali metal oxide.

2. The activator composition according to claim 1, wherein said activator composition comprises
from 0.1 wt% to 95 wt% of said alkali-containing compound a),
from 0.1 wt% to 30 wt% of said compound containing a halogen element b),
from 0.1 wt% to 30 wt% of said compound containing aluminium and a sulphate group c),
from 0.1 wt% to 95 wt% of said compound comprising 40 wt% or more of an earth-alkali metal oxide d),
with reference to the total dry weight of the activator composition.

3. The activator composition according to claim 1 or claim 2, wherein said alkali-containing compound a) is at least one of an oxide, hydroxide, silicate, carbonate, aluminate, sulphate of an alkali metal or ammonium and mixtures thereof.

4. The activator composition according to any one of claims 1-3, wherein said compound containing a halogen element b) is one of the following: a fluoride, chloride, bromide, iodide, fluorosilicate, fluoroaluminate, fluorophosphate or fluorotitanate, of an alkali metal or earth alkali-metal or ammonium, and mixtures thereof.

5. The activator composition according to any one of claims 1-4, wherein said compound containing aluminium and a sulphate group c) is one of Al₂(SO₄)₃, KAl(SO₄)₂ and its hydrates, calcium sulphoaluminate cement, Ca₄(AlO₂)₆SO₄ or ye'elimite, and hydrates thereof, Ca₆Al₂(SO₄)₃(OH)₁₂ and hydrates thereof, and mixtures thereof.

6. The activator composition according to any one of claims 1-5, wherein said compound comprising 40 wt% or more of an earth-alkali metal oxide d) is at least one of clinker for ordinary Portland cement (OPC) and OPC blends; CEM I; calcium aluminate cement; Ca(OH)₂; CaO; MgO; Mg(OH)₂; as well as mixtures thereof.

7. The activator composition according to any one of claims 1-6, the activator composition further comprising at least one organic acid or a salt thereof e), wherein said organic acid is preferably one of oxalic acid, tartaric acid, tannic acid, lactic acid or citric acid or mixtures thereof.

8. The activator composition according to claim 7, wherein the activator composition comprises from 0.1 wt% to 20 wt% of said at least one organic acid or a salt thereof e), with reference to the total dry weight of the activator composition.

9. A binder composition for mortar or concrete, the composition comprising
- the activator composition according to any one of claims 1-8; and
- at least one inorganic precursor f).

10. The binder composition according to claim 9, wherein said binder composition comprises from 50 wt% to 99.8 wt% of said at least one inorganic precursor f) and from 0.2 wt% to 50 wt% of said activator composition, with reference to the total dry weight of the binder composition.

11. The binder composition according to claim 9 or claim 10, wherein said at least one inorganic precursor f) is one of the following:
- a slag, wherein said slag is a ground granulated blast furnace slag (GGBFS), a basic oxygen furnace slag, a ladle slag, a ferrous metallurgical slag or stainless-steel slag, or a slag from non-ferrous metal production, the latter including a zinc metallurgical slag, a nickel metallurgical slag, a lead metallurgical slag, a tin metallurgical slag, or a copper metallurgical slag;
- an ash, wherein said ash is a fly ash of class C or class F, a bottom ash, paper sludge ash, or a biomass ash;
- calcined mine tailings;
- leach residues from metal extraction;
- ground glass;
- cement kiln dust;
- electric arc furnace dust;
- red mud or a bauxite residue;
- silica fume;
- clay or calcined clay;
- synthetic slag or glass;
- ground limestone or dolomite;
and mixtures thereof.

12. The binder composition according to any one of claims 9-11, wherein said binder composition further comprises at least one plasticizing agent g), wherein said at least one plasticizing agent g) is preferably one of a naphthalene-based superplasticizer, a lignosulphate, a protein, a naphtalene sulphonate, a melamine-based superplasticizer, a polycarboxylic ether (PCE) or poly acrylic ether (PAE), a salt or derivative thereof, and mixtures thereof.

13. The binder composition according to claim 12, wherein said binder composition comprises from 0.01 wt% to 5 wt% of said at least one plasticizing agent, with reference to the total dry weight of the binder composition.

14. A concrete or mortar composition comprising the binder composition according to any one of claims 9-13 and at least one of water, sand, gravel and an aggregate.

15. Use of a binder composition according to claims 9-13 in a mortar or a concrete or in 3D printing application, including paver, ready mix concrete, floors and screeds, self-compacting concrete, architectonic concrete, dry-pressed concrete, soil stabilization, grouting, heavy-weight concrete, light-weight concrete, wood pulp concrete, road concrete, and/or repair mortars.
